# EUROPEAN PATENT SPECIFICATION

(11) **EP 1 903 200 B1**
(45) Date of publication and mention of the grant of the patent: **31.08.2011**
(21) Application number: 07017413.1
(22) Date of filing: 05.09.2007
(51) Int. Cl.: F02D 31/00, F02D 41/16, F02D 41/02, B60W 30/16, B60W 10/18, B60W 10/06

(54) **Exhaust gas purification system of internal combustion engine**
Abgasreinigungssystem eines Verbrennungsmotors
Système de purification de gaz d'échappement de moteur à combustion interne

(30) Priority: 20.09.2006 JP 2006255062
(43) Date of publication of application: 26.03.2008
(73) Proprietor: HONDA MOTOR CO., LTD., Tokyo 107-8556 (JP)
(72) Inventor: Chiba, Isao, Wako-shi, Saitama, 351-0193 (JP); Takeuchi, Hiroto, Wako-shi, Saitama, 351-0193 (JP)
(74) Representative: Prechtel, Jörg

(56) References cited:
- EP-A- 1 304 458
- WO-A-02/38933
- JP-A- 2005 282 478

## Description

The present invention relates to an exhaust gas purification system of an internal combustion engine, precisely a system for and a method of purifying exhaust of the engine, more precisely a system for and a method of regenerating a DPF (Diesel Particulate Filter) installed in an exhaust system of an internal combustion engine.

An exhaust system of an internal combustion engine, specifically a diesel engine is equipped with a DPF that removes fine Particulate Matters (PMs) such as unburned hydrocarbons (HC) from the exhaust gas by capturing them in microporous trap. As the captured and deposited fine particulates increase, the filter progressively clogs and hence, its ability to capture the particulates drops, so it is needed to regenerate the DPF by burning off the particulates deposited on the DPF.

A conventional technique is proposed by Japanese Laid-Open Patent Application No. 2005-282478, in which, when engine coolant temperature is lower than a predetermined temperature, regeneration of the DPF is inhibited, thereby preventing misfire or smoke from occurring.

This prior art can avoid the above-mentioned trouble caused by conducting the DPF regeneration during cold start. On the contrary, this prior art is disadvantageous in delaying the DPF regeneration even when the regeneration is highly needed, e.g., when fine particulates have been excessively captured and deposited on the DPF. For instance, the regeneration will be delayed at cold engine start under low ambient temperature even when the fine particulates have been excessively deposited on the DPF.

To avoid such delay EP-A1-1 304 458 discloses a "dynamic threshold strategy" providing an improved algorithm for determining when to initiate a forced filter regeneration. It is proposed to initiate regeneration when a certain threshold for the DPF load value is exceeded making this threshold a function of current engine operating conditions, in particular, a function of exhaust gas temperature. Thus, if the filter is loaded to a critical level, the regeneration could be initiated regardless of current exhaust gas temperatures.

Even though, initiating regeneration in the case that the filter is loaded to a critical level may be appropriate to prevent the efficiency of the engine from dropping down excessively, the problem of misfire or smoke remains when the temperature is low.

An object of the present invention is therefore to provide a system for and a method of purifying exhaust gas of an internal combustion engine having a DPF that more efficiently permits early DPF regeneration when the regeneration is highly needed, such as in a case that fine particulates have been excessively deposited on the DPF, reducing the risk that misfire and smoke will occur.

In order to achieve the object, this invention provides, in a first aspect, a system for purifying exhaust gas of an internal combustion engine, with the features of claim 1.

In order to achieve the object, this invention provides, in a second aspect, a method of purifying exhaust gas of an internal combustion engine, with the features of claim 4.
FIG. 1 is a schematic drawing showing the overall configuration of an exhaust gas purification system of an internal combustion engine according to an embodiment of the invention; and
FIG. 2 is a flowchart showing the operation of the system illustrated in FIG. 1.

An exhaust gas purification system of an internal combustion engine according to an embodiment of the present invention will now be explained with reference to the attached drawings.

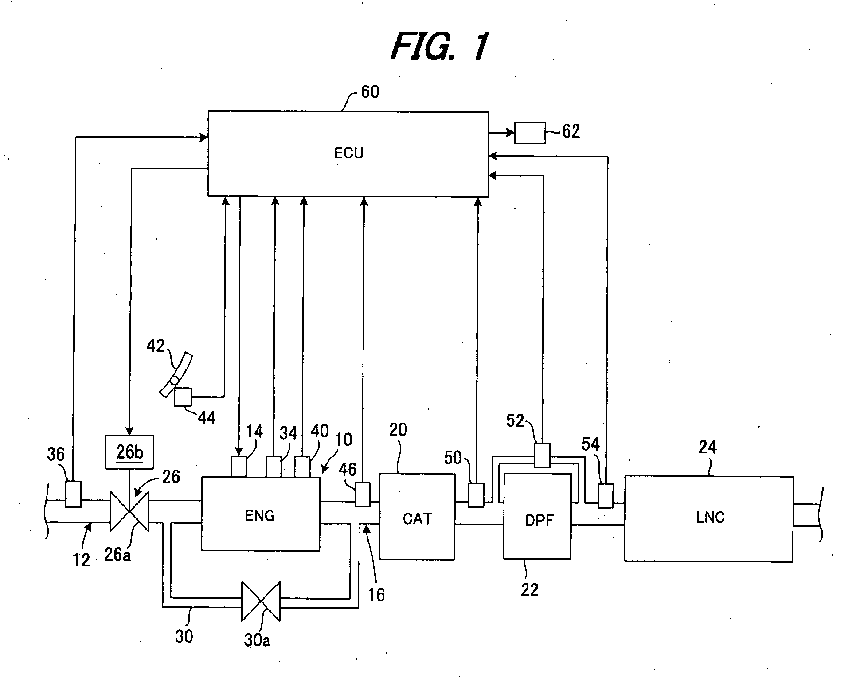

FIG. 1 is a schematic drawing showing the overall configuration of an exhaust gas purification system of an internal combustion engine according to the embodiment of the invention.

In FIG. 1, reference numeral 10 designates a four-cylinder internal combustion engine, more specifically diesel engine (hereinafter called "engine"). The air sucked through an air cleaner (not shown) flows through an intake system 12 having an intake pipe and intake manifold connected thereto, and is drawn into respective combustion chambers (not shown) when intake valves (not shown) each associated with cylinders open and pistons (not shown) each associated with the cylinders descend. The sucked air is compressed and reaches a high temperature when the piston ascends.

Fuel (diesel fuel or diesel oil) stored in a fuel tank (not shown) is pumped by a pump (not shown) to a common rail (not shown), and is supplied to fuel injectors 14 (only one shown) installed to face to the combustion chambers of the individual cylinders. When each fuel injector 14 is opened through a drive circuit (not shown) by an ECU (explained later), it injects fuel into the associated combustion chamber and the injected fuel spontaneously ignites and burns upon coming in contact with the compressed, high-temperature intake air.

As a result, the piston is first driven downward and thereafter ascends to discharge the exhaust gas into an exhaust system 16 constituted by an exhaust manifold and exhaust pipe connected thereto upon opening of an associated exhaust valve (not shown).

An oxidation catalytic converter (illustrated as "CAT") 20 utilizing platinum or the like as catalyst is installed at an appropriate position in the exhaust system 16. A DPF (Diesel Particulate Filter) 22 is installed downstream (in the direction of exhaust gas flow) of the oxidation catalytic converter 20 for capturing particulates or particulate matters (PMs) comprising as unburned hydrocarbons (HC) in the exhaust gas.

The DPF 22 comprises a ceramic honeycomb filter internally provided with exhaust gas passages, whose upstream ends are closed and downstream ends are opened, arranged alternately with another group of exhaust gas passages whose upstream ends are opened and downstream ends are closed. Microporous walls formed with numerous holes of around 10 µm diameter are provided between adjacent passages.

Downstream (in the direction of exhaust gas flow) of the DPF 22 is provided with a lean NOx catalyst (hereinafter called "LNC") 24 that absorbs NOx (nitrogen oxide) components in the exhaust gas. The LNC 24 comprises either one of a NOx catalyst that supports platinum and the like on its carrier and a NOx catalyst that supports both iridium and alkali earth metal on its carrier which is selected from among metal carbide and metal nitride.

In the foregoing configuration, when the oxidation catalytic converter 20 is in oxidation atmosphere, the exhaust gas is oxidized and CO (carbon monoxide) and HC (carbon hydride) are removed. The exhaust gas flows downstream to the DPF 22 where PMs such as unburned HC (hydrocarbons) in the exhaust gas are captured in the holes made on the walls of the DPF 22.

The exhaust gas then flows to the LNC 24. When it is under lean atmosphere, the LNC 24 absorbs the NOx (nitrogen oxide) components and SOx (sulfur oxide) in the exhaust gas. The exhaust gas, thus purified, is discharged to the outside of the engine. The NOx and SOx are reduced to S₂ or N₂ due to reducing effect under high-temperature reducing atmosphere and absorbed by the LNC 24.

The intake system 12 is installed with an intake air adjuster 26 at an appropriate location. The intake air adjuster 26 comprises a valve 26a and an actuator such as electric motor 26b connected thereto. When the actuator 26b of the intake air adjuster 26 is driven by the ECU (explained later) through a drive circuit (not shown), the valve 26a is operated in response thereto to regulate the opening of the intake pipe to the closing direction, thereby reducing the flow rate of intake air passing through the intake pipe.

An Exhaust Gas Recirculation pipe 30 is installed between the exhaust pipe and intake pipe to connect the exhaust system and exhaust system. An EGR valve 30a is disposed to the EGR pipe 30 to open and close it. The EGR valve 30a is operated by the ECU (explained later) through a drive circuit (not shown) to recirculate a part of the exhaust gas to the intake system.

A crank angle sensor 34 including multiple sets of magnetic pickups is installed near the crankshaft (not shown) of the engine 10. The crank angle sensor 34 produces outputs indicative of a cylinder identification signal, a TDC signal at or near the TDC of each of the four cylinders, and a crank angle signal every predetermined crank angle.

An air flow meter 36 is installed at an appropriate location of the intake pipe in the intake system 12 and produces an output or signal proportional to the flow rate of intake air and indicative of the engine load. A coolant temperature sensor or detector 40 is installed near a coolant passage (not shown) of the engine 10 and produces an output or signal indicative of the engine coolant temperature TW.

An accelerator position sensor 44 is installed near an accelerator pedal 42 located on the floor near the driver's seat (not shown) of the vehicle and produces an output or signal indicative of the accelerator position or depressing amount AP (i.e., indicative of the engine load).

An universal air/fuel ratio sensor 46 is installed in the exhaust system 16 at a position upstream of the oxidation catalytic converter 20 and produces an output or signal proportional to oxygen concentration of the exhaust gas at that location.

A first temperature sensor 50 is installed at a position downstream of the oxidation catalytic converter 20 and upstream of the DPF 22 and produces an output or signal proportional to the temperature of the exhaust gas flowing into the DPF 22.

A differential pressure sensor 52 is provided at the DPF 22 and produces an output or signal proportional to differential pressure P between the pressure of the exhaust gas flowing into the DPF 22 and the pressure of the exhaust gas flowing out of the DPF 22, i.e., the differential pressure P between the inlet side and outlet side pressures of the DPF 22.

A second temperature sensor 54 is installed at a position downstream of the DPF 22 and upstream of the LNC 24 and produces an output or signal proportional to the temperature of the exhaust gas flowing into the LNC 24.

The foregoing outputs of the sensors are sent to the ECU (Electronic Control Unit; now assigned with reference numeral 60). The ECU 60 is constituted as a microcomputer comprising a CPU, ROM and RAM and also includes an input/output circuit, counter and the like. The ECU 60 detects or calculates the engine speed NE of the engine 10 by using the counter to count, from among the outputs of the sensors, the crank angle signals outputted by the crank angle sensor 34.

An indicator 62 is installed at a dashboard (not shown) near the driver's seat. The indicator 62 is electrically connected to the ECU 60 and blinks or flashes on and off in response to the output from the ECU 60.

Although the engine 10 is provided with turbocharger having a turbine installed in the exhaust system 16 and a compressor installed in the intake system 12 to be driven by the turbine, the illustration and explanation thereof are omitted for the simplicity, since this embodiment relates to the exhaust gas purification system. The illustration and explanation of the other sensors used for usual control of the engine 10 are also omitted for the same reason.

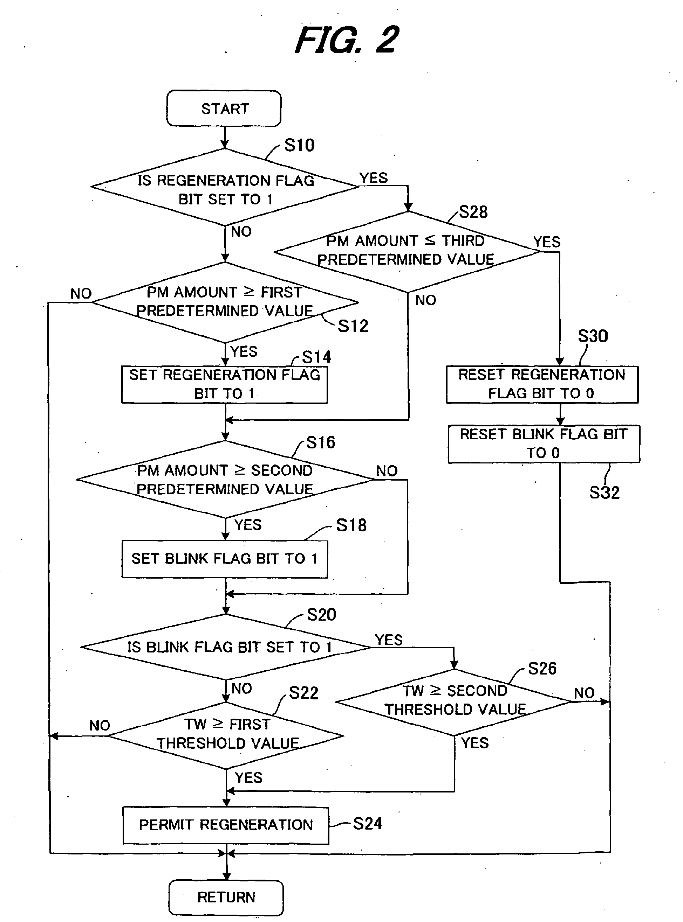

Next, the operation of the exhaust gas purification system of the internal combustion engine shown in FIG. 1 will be explained with reference to a flowchart of FIG. 2.

The operation shown in FIG. 2 is executed by the ECU 60 at predetermined intervals, e.g., 100 milliseconds.

Explaining this, the program begins in S10 in which it is determined whether the bit of a regeneration flag is set to 1. Since an initial value of the bit of this flag is 0, the result in S10 is normally negative and the program proceeds to S12 in which it is determined whether an amount of PMs (particulates or particulate matters) captured and deposited on the DPF 22 is equal to or greater than a first predetermined value.

When the result in S12 is negative, the program skips remaining steps of the routine. When the result in S12 is affirmative, the program proceeds to S14 in which the bit of the regeneration flag is set to 1. Setting the bit of the regeneration flag to 1 means that regeneration of the DPF 22 is permissible.

For that reason, the first predetermined value is set to be a value enough for enabling to discriminate whether regeneration of the DPF 22 is permissible. The amount of PMs captured on the DPF 22 is estimated or calculated from the DPF differential pressure P obtained from the output of the differential pressure sensor 52.

The program proceeds to S16 in which it is determined whether the amount of PMs is equal to or greater than a second predetermined value. The second predetermined value is an excessive limit indicating that the amount of PMs captured on the DPF 22 is excessive. The second predetermined value is accordingly set to be greater than the first predetermined value.

When the result in S16 is affirmative, the program proceeds to S18 in which the bit of a blink flag is set to 1. This process makes the indicator 62 blink on and off to inform the driver to conduct load increase driving that enables regeneration of the DPF 22. The load increase driving can be achieved by running the vehicle not in an urban area in which traffic is often congested but in a suburb area or on highway. When the result in S16 is negative, the program skips S18.

The program then proceeds to S20 in which it is determined whether the bit of the blink flag has been set to 1 and when the result is negative, the program proceeds to S22 in which it is determined whether the detected engine coolant temperature TW is equal to or greater than a first threshold value, e.g., 60 °C.

When the result in S22 is affirmative, since it means that the temperature of the engine 10, i.e., the coolant temperature TW is equal to or greater than the first threshold value, the program proceeds to S24 in which the DPF regeneration is permitted, i.e., the process of regenerating the DPF 22 conducted by burning off the particulates captured and deposited on the DPF 22 is permitted.

On the other hand, when the result in S20 is affirmative, the program proceeds to S26 in which it is determined whether the detected engine coolant temperature TW is equal to or greater than a second threshold value, e.g., 40 °C and when the result is affirmative, the program proceeds to S24 in which the DPF regeneration is permitted.

Specifically, when the amount of PMs captured on the DPF 22 is equal to or greater than the predetermined amount (second predetermined amount), which means the amount of captured PMs is excessive, the first threshold value is changed to the second threshold value that is set to a value lower than the first threshold value and comparison is conducted.

When the result in S22 is negative, since it means that the engine temperature (coolant temperature TW) is low, the DPF regeneration may not appropriately be conducted, and also since the amount of PMs captured on the DPF 22 is not excessive, the need of the DPF regeneration is not high. Therefore, the DPF regeneration is not permitted. When the result in S26 is negative, the DPF regeneration is not permitted also, since the DPF regeneration may not appropriately be conducted.

When the result in S10 is affirmative, the program proceeds to S28 in which it is determined whether the amount of PMs is equal to or smaller than a third predetermined value. The third predetermined value is set to be zero or thereabout.

When the result in S28 is negative, the program proceeds to S16 to conduct the foregoing processing. When the result in S28 is affirmative, since it means that the amount of PMs captured on the DPF 22 is zero or thereabout and it indicates that regeneration or informing by the indicator 62 is not necessary, the program proceeds to S30 in which the bit of the regeneration flag is reset to 0 so as to discontinue or stop the regeneration of the DPF 22, then to S32 in which the bit of the blink flag is reset to 0 and the program is terminated.

As stated above, the embodiment is configured to comprise a system for and a method of purifying exhaust gas of an internal combustion engine (10) having a DPF (filter) 22 installed in an exhaust system (16) for capturing PMs (particulates) in the exhaust gas generated by the engine, including: a temperature detector (40) or step that detects a temperature of the engine (engine coolant temperature TW); and a controller (60, S22, S24) or step that permits regeneration of the DPF (filter) 22 conducted by burning off the PMs (particulates) captured and deposited on the filter, when the detected temperature is equal to or greater than a first threshold value (e.g., 60°C); characterized in that: a threshold value changer (S26) or step that changes the first threshold value to a second threshold value (e.g., 40°C) that is set to be lower than the first threshold value, when an amount of PMs (particulates) is equal to or greater than a (second) predetermined value that indicates an excessive limit; and the controller or the step permits the regeneration of the DPF (filter) 22 when the detected temperature is equal to or greater than the second threshold value (S24).

Owing to this configuration, when the regeneration is highly needed, e.g., when fine particulates have been excessively captured and deposited on the DPF 22, the early DPF regeneration is permitted, thereby prompting the DPF regeneration to be finished as early as possible.

Further, it is configured such that the controller or the step informs a driver to conduct load increase driving that enables the regeneration of the DPF (filter) 22 when the amount of PMs (particulates) is equal to or greater than the (second) predetermined value (S16, S18).

In addition to the foregoing effect, due to early DPF regeneration and early start of the load increase driving, it becomes possible to shorten a period of time needed for load increase driving. Therefore, the regeneration can be accelerated, for instance, even at cold engine start under low ambient temperature, thereby mitigating burden on the driver.

Further, it is configured such that the controller or the step determines whether the amount of PMs (particulates) is equal to or smaller than a third (second) predetermined value (S28), and discontinues the regeneration of the DPF (filter) 22 when the amount of particulates is equal to or smaller than the third (second) predetermined value (S30).

Further, it is configured such that the engine (10) is a diesel engine and the filter (22) is a Diesel Particulate Filter.

It should be noted that, in the foregoing, the amount of particulates or PMs captured on the DPF 22 is estimated or calculated from differential pressure, the estimation or calculation can instead be made based on operating condition (engine speed, fuel injection amount etc.).

It should further be noted that, although the engine coolant temperature TW is used to indicate the engine temperature, the invention should not be limited thereto and any parameters indicative of the engine temperature can be utilized. For example, it is alternately possible to detect and use engine atmosphere temperature, ambient temperature, oil temperature or the like.

It should further be noted that, although the foregoing explanation is made taking application of the invention to a vehicle engine as an example, the invention can also be applied to an engine for a boat propulsion system such as an outboard motor having a vertically oriented crankshaft.

In a system for purifying exhaust gas of an internal combustion engine having a DPF installed in an exhaust system for capturing particulates in the exhaust gas in which DPF regeneration is permitted when a detected engine coolant temperature TW is equal to or greater than a first threshold value S22, S24, the first threshold value is changed to a second threshold value that is set to be lower than the first threshold value, when an amount of particulates is equal to or greater than a predetermined value that indicates an excessive limit S26 ; and the regeneration is permitted when the detected engine coolant temperature TW is equal to or greater than the second threshold value S24 .

## Claims

1. A system for purifying exhaust gas of an internal combustion engine (10) having a filter (22) installed in an exhaust system (16) for capturing particulates in the exhaust gas generated by the engine, including:
a temperature detector (40) that detects a temperature of the engine;
a controller (60, S22, S24) that permits regeneration of the filter conducted by burning off the particulates captured and deposited on the filter, when the detected temperature is equal to or greater than a first threshold value; and
a threshold value changer (S26) that changes the first threshold value to a second threshold value that is set to be lower than the first threshold value, when an amount of particulates is equal to or greater than a predetermined value that indicates an excessive limit;
wherein the controller permits the regeneration of the filter when the detected temperature is equal to or greater than the second threshold value (S24);
**characterized in that** :
the controller informs a driver to conduct load increase driving that enables the regeneration of the filter when the amount of particulates is equal to or greater than the predetermined value (S16, S 18).

2. The system according to claim 1 , wherein the controller determines whether the amount of particulates is equal to or smaller than a second predetermined value (S28), and discontinues the regeneration of the filter when the amount of particulates is equal to or smaller than the second predetermined value (S30).

3. The system according to claim 1 or 2, wherein the engine (10) is a diesel engine and the filter (22) is a Diesel Particulate Filter.

4. A method of purifying exhaust gas of an internal combustion engine (10) having a filter (22) installed in an exhaust system (16) for capturing particulates in the exhaust gas generated by the engine, including the steps of:
detecting a temperature of the engine;
permitting regeneration of the filter conducted by burning off the particulates captured and deposited on the filter, when the detected temperature is equal to or greater than a first threshold value (S22, S24); and
changing the first threshold value to a second threshold value that is set to be lower than the first threshold value, when an amount of particulates is equal to or greater than a predetermined value that indicates an excessive limit (S26);
wherein the step of permitting permits the regeneration of the filter when the detected temperature is equal to or greater than the second threshold value (S24);
**characterized in that** :
the step of permitting includes the step of:
informing a driver to conduct load increase driving that enables the regeneration of the filter when the amount of particulates is equal to or greater than the predetermined value (S 16, S 18).

5. The method according to claim 4 wherein the step of permitting includes the step of:
determining whether the amount of particulates is equal to or smaller than a second predetermined value (S28), and discontinuing the regeneration of the filter when the amount of particulates is equal to or smaller than the second predetermined value (S30).

6. The method according to claim 4 or 5 wherein the engine (10) is a diesel engine and the filter (22) is a Diesel Particulate Filter.

## Patentansprüche

1. System zum Reinigen von Abgas eines Verbrennungsmotors (10) mit einem Filter (22), der in einem Auslasssystem (16) zum Auffangen von Partikeln in dem von dem Motor erzeugten Abgas installiert ist, umfassend:
- einen Temperaturdetektor (40), welcher eine Temperatur des Motors detektiert,
- eine Regel-/Steuereinheit (60, S22, S24), welche eine Regeneration des Filters erlaubt, indem die aufgefangenen und an dem Filter angelagerten Partikel abgebrannt werden, wenn die detektierte Temperatur gleich wie oder größer als ein erster Schwellenwert ist, und
- einen Schwellenwert-Änderer (S26), welcher den ersten Schwellenwert zu einem zweiten Schwellenwert ändert, welcher eingestellt ist, um niedriger als der ersten Schwellenwert zu sein, wenn eine Menge an Partikeln gleich wie oder größer als ein vorbestimmter Wert ist, welcher eine überhöhte Grenze anzeigt,
wobei die Regel-/Steuereinheit die Regeneration des Filters erlaubt, wenn die detektierte Temperatur gleich wie oder größer als der zweite Schwellenwert (S24) ist,
**dadurch gekennzeichnet, dass** die Regel-/Steuereinheit einen Fahrer informiert, ein Last-erhöhendes Fahren durchzuführen, welches die Regeneration des Filters ermöglicht, wenn die Menge an Partikeln gleich wie oder größer als der vorbestimmte Wert (S16, S18) ist.

2. System nach Anspruch 1, wobei die Regel-/Steuereinheit bestimmt, ob die Menge an Partikeln gleich wie oder kleiner als ein zweiter vorbestimmter Wert (S28) ist, und die Regeneration des Filters unterbricht, wenn die Menge an Partikeln gleich wie oder kleiner als der zweite vorbestimmte Wert (S30) ist.

3. System nach Anspruch 1 oder 2, wobei der Motor (10) ein Dieselmotor ist und der Filter (22) ein Diesel-Partikelfilter ist.

4. Verfahren zum Reinigen von Abgas eines Verbrennungsmotor (10) mit einem Filter (22), der in einem Auslasssystem (16) zum Auffangen von Partikeln in dem von dem Motor erzeugten Abgas installiert ist, umfassend die folgenden Schritte:
- Detektieren einer Temperatur des Motors,
- Erlauben einer Regeneration des Filters, welche durchgeführt wird, indem die aufgefangen und an dem Filter angelagerten Partikel abgebrannt werden, wenn die detektierte Temperatur gleich wie oder größer als ein erster Schwellenwert (S22, S24) ist, und
- Ändern des ersten Schwellenwerts zu einem zweiten Schwellenwert, welcher eingestellt ist, um niedriger als der ersten Schwellenwert zu sein, wenn eine Menge an Partikeln gleich wie oder größer als ein vorbestimmter Wert ist, welcher eine überhöhte Grenze (S26) anzeigt,
wobei der Schritt des Erlaubens die Regeneration des Filters erlaubt, wenn die detektierte Temperatur gleich wie oder größer als der zweite Schwellenwert (S24) ist,
**dadurch gekennzeichnet, dass** der Schritt des Erlaubens den folgenden Schritt umfasst:
- Informieren eines Fahrers, ein Last-erhöhendes Fahren durchzuführen, welches die Regeneration des Filters ermöglicht, wenn die Menge an Partikeln gleich wie oder größer als der vorbestimmte Wert (S16, S18) ist.

5. Verfahren nach Anspruch 4, wobei der Schritt des Erlaubens den folgenden Schritt umfasst:
- Bestimmen, ob die Menge an Partikeln gleich wie oder kleiner als ein zweiter vorbestimmter Wert (S28) ist, und Unterbrechen der Regeneration des Filters, wenn die Menge an Partikeln gleich wie oder kleiner als der zweite vorbestimmte Wert (S30) ist.

6. Verfahren nach Anspruch 4 oder 5, wobei der Motor (10) ein Dieselmotor ist und der Filter (22) ein Diesel-Partikelfilter ist.

## Revendications

1. Système de purification de gaz d'échappement d'un moteur à combustion interne (10) comportant un filtre (22) installé dans un système d'échappement (16) pour capturer des particules dans le gaz d'échappement généré par le moteur, comprenant :
un détecteur de température (40) qui détecte une température du moteur ;
une unité de commande (60, S22, S24) qui permet une régénération du filtre conduite par brûlage de nettoiement des particules capturées et déposées sur le filtre, lorsque la température détectée est supérieure ou égale à une première valeur seuil ; et
un dispositif de remplacement de valeur seuil (S26) qui remplace la première valeur seuil par une seconde valeur seuil qui est fixée pour être inférieure à la première valeur seuil, lorsqu'une quantité de particules est supérieure ou égale à une valeur prédéterminée qui indique une limite excessive ;
dans lequel l'unité de commande permet la régénération du filtre lorsque la température détectée est supérieure ou égale à la seconde valeur seuil (S24) ;
**caractérisé en ce que** :
l'unité de commande indique à un conducteur d'effectuer une conduite d'augmentation de charge qui permet la régénération du filtre lorsque la quantité de particules est supérieure ou égale à la valeur prédéterminée (S16, S18).

2. Système selon la revendication 1, dans lequel l'unité de commande détermine si la quantité de particules est inférieure ou égale à une seconde valeur prédéterminée (S28), et arrête la régénération du filtre lorsque la quantité de particules est inférieure ou égale à la seconde valeur prédéterminée (S30).

3. Système selon la revendication 1 ou 2, dans lequel le moteur (10) est un moteur diesel et le filtre (22) est un filtre à particules diesel.

4. Procédé de purification de gaz d'échappement d'un moteur à combustion interne (10) comportant un filtre (22) installé dans un système d'échappement (16) permettant de capturer des particules dans le gaz d'échappement généré par le moteur, comprenant les étapes consistant à :
détecter une température du moteur ;
permettre la régénération du filtre réalisée par brûlage de nettoiement des particules capturées et
déposées sur le filtre, lorsque la température détectée est supérieure ou égale à une première valeur seuil (S22, S24) ; et
remplacer la première valeur seuil par une seconde valeur seuil qui est fixée pour être inférieure à la première valeur seuil, lorsqu'une quantité de particules est supérieure ou égale à une valeur prédéterminée qui indique une limite excessive (S26) ;
dans lequel l'étape de permission permet la régénération du filtre lorsque la température détectée est supérieure ou égale à la seconde valeur seuil (S24) ;
**caractérisé en ce que** :
l'étape de permission inclut la sous-étape consistant à :
indiquer à un conducteur d'effectuer une conduite d'augmentation de charge qui permet la régénération du filtre lorsque la quantité de particules est supérieure ou égale à la valeur prédéterminée (S16, S18) .

5. Procédé selon la revendication 4, dans lequel l'étape de permission inclut la sous-étape consistant à :
déterminer si la quantité de particules est inférieure ou égale à une seconde valeur prédéterminée (S28), et arrêter la régénération du filtre lorsque la quantité de particules est inférieure ou égale à la seconde valeur prédéterminée (S30) .

6. Procédé selon la revendication 4 ou 5, dans lequel le moteur (10) est un moteur diesel et le filtre (22) est un filtre à particules diesel.
